# EUROPÄISCHE PATENTANMELDUNG

(11) **EP 4 576 485 A1**
(43) Veröffentlichungstag der Anmeldung: **25.06.2025**
(21) Anmeldenummer: 23217669.3
(22) Anmeldetag: 18.12.2023
(51) Int. Cl.: H02J 7/00

(54) **SYSTEMÜBERWACHUNG VON AKKUBETRIEBENEN WERKZEUGMASCHINEN**

(71) Anmelder: Hilti Aktiengesellschaft, 9494 Schaan (LI)
(72) Erfinder: Hauser, Klaus, 86830 Schwabmünchen (DE); Ender, Moses, 86916 Kaufering (DE); Hartmann, Markus, 87665 Mauerstetten (DE); Seltmann, Daniel, 86842 Türkheim (DE); Frenzel, Mathias, 86944 Unterdießen (DE); Holubarsch, Markus, 86899 Landsberg am Lech (DE); Stanger, Robert, 87600 Kaufbeuren (DE); Britz, Rory, 82319 Starnberg (DE); Goyal, Varnim, 86899 Landsberg am Lech (DE)
(74) Vertreter: Hilti Aktiengesellschaft Corporate Intellectual Property

(57) **Zusammenfassung**

Verfahren zum Steuern und/oder Regeln eines Akkumulators, insbesondere als Energieversorgung für eine Werkzeugmaschine, wobei der Akkumulator wenigstens eine Echtzeituhr, wenigstens einen Sensor, wenigstens einen Transceiver, eine Speichereinrichtung sowie eine Steuerungsvorrichtung enthält.

Das Verfahren enthält die folgenden Verfahrensschritte
- Einstellen des Akkumulators von einem Aktivierungszustand in einen Deaktivierungszustand;
- Einstellen des Akkumulators von dem Deaktivierungszustand in einen Überprüfungszustand nach Ablauf einer ersten Zeitdauer ab dem Einstellen des Akkumulators in den Deaktivierungszustand, wobei der Akkumulator für eine zweite Zeitdauer in dem Überprüfungszustand eingestellt ist;
- Erfassen wenigstens eines ersten Betriebskennwertes durch den wenigstens einen Sensor, wenn der Akkumulator in dem Überprüfungszustand eingestellt ist;
- Abgleich des ersten Betriebskennwertes mit wenigstens einem hinterlegten Schwellwert;
- Einstellen des Akkumulators von dem Überprüfungszustand in einen Deaktivierungszustand, wenn kein erfasster Betriebskennwert mindestens einem ersten Schwellwert entspricht; oder
- Einstellen des Akkumulators von einem Überprüfungszustand in einen Sperrzustand, wenn wenigstens ein erfasster Betriebskennwert mindestens einem ersten Schwellwert entspricht.

## Beschreibung

Die vorliegende Erfindung betrifft ein Verfahren zum Steuern und/oder Regeln eines Akkumulators, insbesondere als Energieversorgung für eine Werkzeugmaschine, wobei der Akkumulator wenigstens eine Echtzeituhr, wenigstens einen Sensor, wenigstens einen Transceiver, eine Speichereinrichtung sowie eine Steuerungsvorrichtung enthält.

Des Weiteren betrifft die vorliegende Erfindung einen Akkumulator, insbesondere als Energieversorgung für eine Werkzeugmaschine, zur Durchführung des Verfahrens.

Darüber hinaus betrifft die vorliegende Erfindung ein System enthaltend wenigstens einen Akkumulator, insbesondere als Energieversorgung für eine Werkzeugmaschine.

Akkumulatoren, insbesondere mit Energiespeicherzellen auf Basis einer Lithium-Ionen-Technologie, sind als Energieversorgung für Werkzeugmaschinen seit längerem aus dem Stand der Technik bekannt. Für gewöhnlich weisen diese Akkumulatoren eine Vielzahl an unterschiedlichen Sensoren zur Überwachung des Akkumulators sowie des Verhaltens des Akkumulators auf. Für gewöhnlich erfolgt die Überwachung mit Hilfe der Sensoren vornehmlich während der Verwendung des Akkumulators als Energieversorgung einer Werkzeugmaschine oder bei einem Ladevorgangs statt, wenn der Akkumulator mit einer entsprechenden Ladevorrichtung (auch Lader genannt) verbunden ist. Darüber hinaus sind diese Sensoren oftmals so ausgestaltet, dass sie lediglich eine bereits kritische bzw. unumkehrbare Situation (beispielsweise einen sogenannten «thermal runaway») erfassen können. Kritische Trends bzw. schleichende Tendenzen zu einer gegeben falls kritischen Situation können häufig nicht oder nur unzureichend erfasst werden. Beschädigungen oder ein Totalausfall eines Akkumulators können hierdurch nicht verhindert werden.

Es ist damit Aufgabe der vorliegenden Erfindung das vorstehend beschriebene Problem zu lösen.

Die Aufgabe wird gelöst durch den Gegenstand des unabhängigen Patentanspruchs 1, 7 und 8. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch ein Verfahren zum Steuern und/oder Regeln eines Akkumulators, insbesondere als Energieversorgung für eine Werkzeugmaschine, wobei der Akkumulator wenigstens eine Echtzeituhr, wenigstens einen Sensor, wenigstens einen Transceiver, eine Speichereinrichtung sowie eine Steuerungsvorrichtung enthält.

Erfindungsgemäß ist vorgesehen, dass das Verfahren die folgenden Verfahrensschritte enthält
- Einstellen des Akkumulators von einem Aktivierungszustand in einen Deaktivierungszustand;
- Einstellen des Akkumulators von dem Deaktivierungszustand in einen Überprüfungszustand nach Ablauf einer ersten Zeitdauer ab dem Einstellen des Akkumulators in den Deaktivierungszustand, wobei der Akkumulator für eine zweite Zeitdauer in dem Überprüfungszustand eingestellt ist;
- Erfassen wenigstens eines ersten Betriebskennwertes durch den wenigstens einen Sensor, wenn der Akkumulator in dem Überprüfungszustand eingestellt ist;
- Abgleich des ersten Betriebskennwertes mit wenigstens einem hinterlegten Schwellwert;
- Einstellen des Akkumulators von dem Überprüfungszustand in einen Deaktivierungszustand, wenn kein erfasster Betriebskennwert mindestens einem ersten Schwellwert entspricht; oder
- Einstellen des Akkumulators von einem Überprüfungszustand in einen Sperrzustand, wenn wenigstens ein erfasster Betriebskennwert mindestens einem ersten Schwellwert entspricht.

Entsprechend einer vorteilhaften Ausführungsform kann es möglich sein, dass das Verhältnis des ersten Zeitraums des Akkumulators in dem Deaktivierungszustand und des zweiten Zeitraums des Akkumulators in dem Überprüfungszustand wenigstens 1/1000 beträgt.

Gemäß einer weiteren vorteilhaften Ausführungsform kann es möglich sein, dass die erste Zeitdauer reduziert wird, wenn wenigstens ein erfasster Betriebskennwert mindestens einem zweiten Schwellwert entspricht, wobei der zweite Schwellwert geringer oder höher ist als der erste Schwellwert.

Entsprechend einer weiteren vorteilhaften Ausführungsform kann es möglich sein, dass die erste Zeitdauer reduziert wird, wenn vor dem Einstellen des Akkumulators von dem Aktivierungszustand in den Deaktivierungszustand wenigstens ein erfasster Betriebskennwert mindestens einem zweiten Schwellwert entspricht.

Gemäß einer weiteren vorteilhaften Ausführungsform kann der folgenden Verfahrensschritt möglich sein:
- Einstellen wenigstens eines Parameters des Akkumulators von einem ersten Wert in einen zweiten Wert durch die Steuerungsvorrichtung des Akkumulators, wenn wenigstens ein erfasster Betriebskennwert mindestens einem ersten oder zweiten Schwellwert entspricht. Entsprechend einer weiteren vorteilhaften Ausführungsform kann der folgenden Verfahrensschritt möglich sein:
   - Markieren des erfassten Betriebskennwertes mit einem Zeitstempel durch die Echtzeituhr und Abspeichern des mit einem Zeitstempel markierten Betriebskennwerts in der Speichereinrichtung.

Die Echtzeituhr kann auch als Real-Time-Clock (RTC) bezeichnet werden.

Die erfassten Messwerte können mit einem Zeitstempel (d.h. tatsächliche Uhrzeit bzw. einer Echtzeit) abgespeichert werden. Somit kann der zeitliche Verlauf der Messwerte gut nachvollzogen werden. Mit Hilfe der Zeitstempel, kann das tatsächliche Erfassen von Betriebswerten genau dokumentiert werden. Mit der sonst üblichen relativen Zeitmessung (d.h. ohne Echtzeituhr) können nur Zeitdifferenzen zwischen dem jeweiligen Erfassen von Betriebskennwerten dokumentiert werden. Die von der Echtzeituhr gesetzten Zeitstempel an den erfassten Betriebskennwerten zeigen hingegen, wann genau der Akkumulator in welchem Betriebszustand war. Mit anderen Worten: wann und für lange der Akkumulator in einem Aktivierungszustand, Überprüfungszustand oder Deaktivierungszustand war. Hierdurch kann bei einem Auftreten eines möglichen Problems bzw. einer technischen Störung festgestellt werden, ob ein Erfassen von Betriebskennwerten während eines Überprüfungszustands korrekt stattgefunden hat, oder ob beispielsweise Sensoren keine Betriebskennwerte erfassen konnten. Die tatsächliche Ursachenforschung bei einer technischen Störung wird hierdurch erleichtert.

Des Weiteren wird die Aufgabe gelöst durch einen Akkumulator, insbesondere als Energieversorgung für eine Werkzeugmaschine, zur Durchführung des Verfahrens, wobei der Akkumulator wenigstens eine Echtzeituhr, wenigstens einen Sensor, wenigstens einen Transceiver, eine Speichereinrichtung sowie eine Steuerungsvorrichtung enthält.

Darüber hinaus wird die Aufgabe gelöst durch ein System enthaltend wenigstens einen Akkumulator, insbesondere als Energieversorgung für eine Werkzeugmaschine, und eine mit dem Akkumulator verbindbare Systemkomponente, zur Durchführung des Verfahrens, wobei der Akkumulator wenigstens eine Echtzeituhr, wenigstens einen Sensor, wenigstens einen Transceiver, eine Speichereinrichtung sowie eine Steuerungsvorrichtung und die Systemkomponente wenigstens eine Steuereinheit, eine Speichereinheit sowie wenigstens einen Transceiver enthält.

Gemäß einer weiteren vorteilhaften Ausführungsform kann es möglich sein, dass das System ausgestaltet ist zum
- Aussenden wenigstens eines Signals von dem wenigstens einen Transceiver des Akkumulators an den wenigstens einen Transceiver der Systemkomponente, wenn wenigstens ein erfasster Betriebskennwert mindestens einem ersten Schwellwert entspricht; und
- Aussenden wenigstens eines Signals von der Systemkomponente zu dem Transceiver des Akkumulators zum Einstellen wenigstens eines Parameters des Akkumulators von einem ersten Wert in einen zweiten Wert.

Entsprechend einer weiteren vorteilhaften Ausführungsform kann es möglich sein, dass die Systemkomponente in Form einer Werkzeugmaschine oder Ladevorrichtung ausgestaltet ist.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Werkzeugmaschine mit einem erfindungsgemäßen Akkumulator;

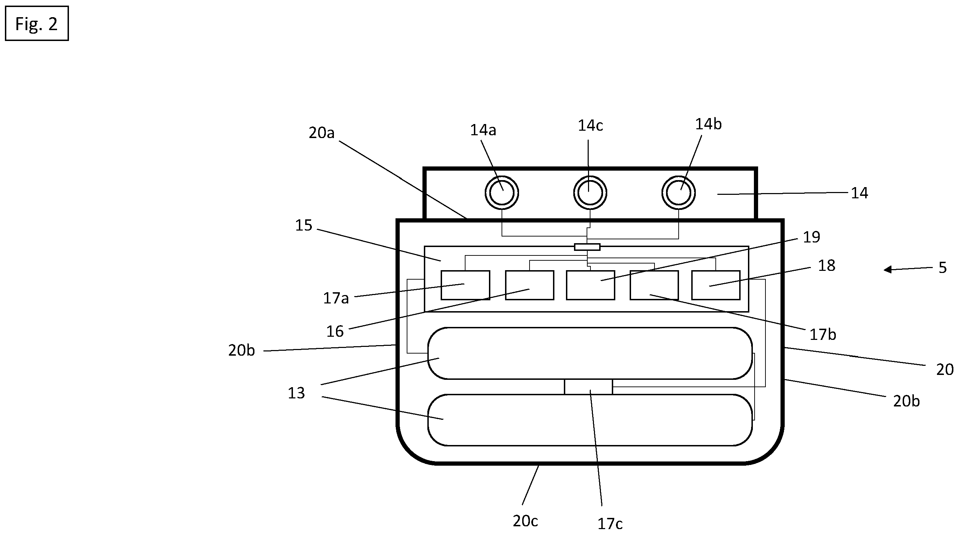

- Figur 2: eine schematische Vorderansicht des Akkumulator mit einen Pluskontakt. Minuskontakt und Kommunikationskontakt; und
- Figur 3: eine schematische Seitenansicht auf eine Ladevorrichtung mit dem erfindungsgemäßen Akkumulator.

### Ausführungsbeispiele:

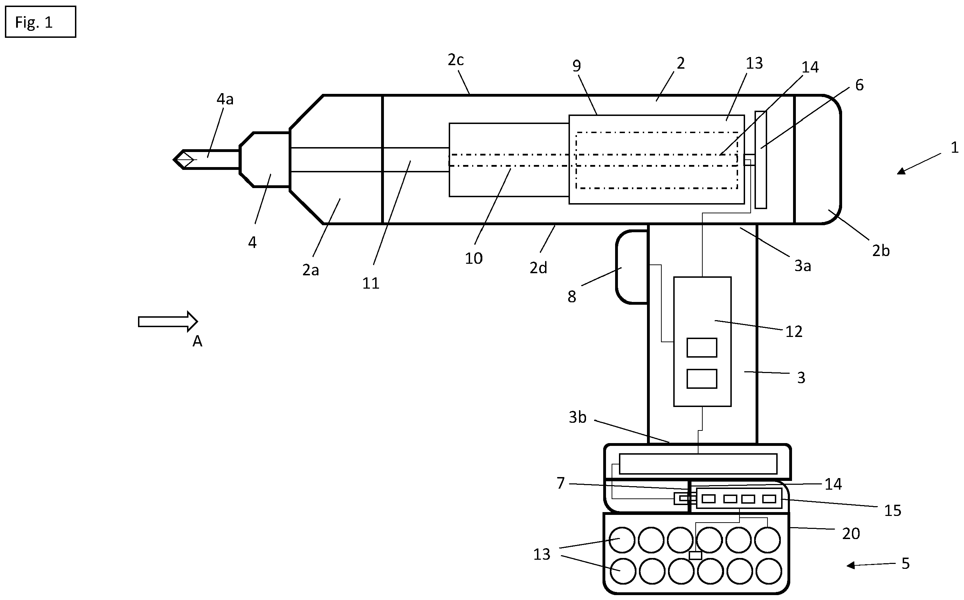

Figur 1 zeigt eine Werkzeugmaschine 1 gemäß einer beispielhaften Ausführungsform. Die Werkzeugmaschine 1 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs 4a. In den Figuren ist das Werkzeug 4a als Schrauber-Bit dargestellt.

Entsprechend einem alternativen Ausführungsbeispiel kann das Werkzeug 4a auch in Form eines Bohrers ausgestaltet sein.

An dem unteren Ende 2d des Gehäuses 2 ist ein erstes Ende 3a des Handgriffs 3 positioniert. An dem zweiten Ende 3b des Handgriffs 3 ist eine Schnittstelle 7 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann. Das Einstellen von dem Deaktivierungszustand in den Aktivierungszustand erfolgt durch das Drücken des Aktivierungsschalters 8 in Pfeilrichtung A.

An die Schnittstelle 7 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine 1 mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Die als Stromkabel ausgestaltete Energieversorgung 5 ist in den Figuren nicht dargestellt.

Im Inneren des Gehäuses 2 ist im Wesentlichen ein Elektromotor 9 als Antrieb, eine Getriebevorrichtung 10, eine Antriebswelle 11, eine Lüftungseinrichtung 6 und eine Steuereinrichtung 12 positioniert.

Der Elektromotor 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug übertragen werden kann.

Die Steuereinrichtung 12 ist mittels entsprechenden Leitungen L mit dem Aktivierungsschalter 8, der Schnittstelle 7 und dem Elektromotor 9 verbunden.

Der Elektromotor 9 ist in Form eines bürstenlosen Elektromotors ausgestaltet.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen.

Der Akkumulator 5 enthält im Wesentlichen ein Akku-Gehäuse 20, eine Anzahl an Energiespeicherzellen 13, eine Akku-Schnittstelle 14, eine Steuerungseinrichtung 15, Echtzeituhr 16, einen ersten, zweiten und dritten Sensor 17a, 17b, 17c, wenigstens einen Transceiver 18 sowie eine Speichereinrichtung 19.

Die Energiespeicherzellen 13 können auch als Akku-Zellen bezeichnet werden und sind im Inneren des Akku-Gehäuses 20 angeordnet.

Das Akku-Gehäuse 20 enthält dabei im Wesentlichen ein Deckelelement 20a, vier Seitenwände 20b und ein Bodenelement 20c.

Die Akku-Schnittstelle 14 ist an der Außenseite des Deckelelements 20a angeordnet und dient zum elektrischen bzw. elektronischen sowie mechanischen Verbinden des Akkumulators 5 mit der Werkzeugmaschine 1 oder einer Ladevorrichtung 21.

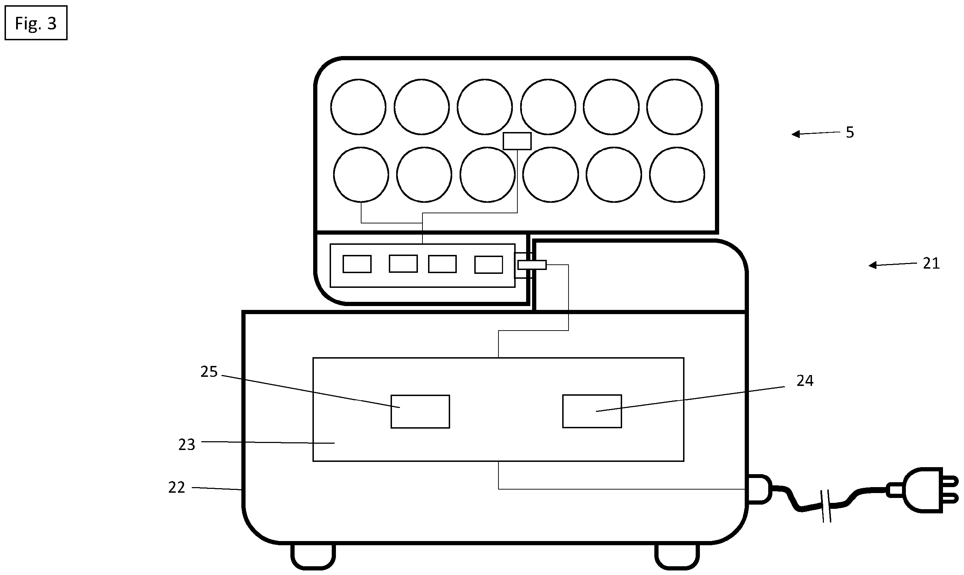

Die Ladevorrichtung 21 dient zum Laden des Akkumulators 5 mit elektrischer Energie und ist in den Figuren nicht dargestellt. Wie in Figur 3 gezeigt, enthält die Ladevorrichtung 21 ein Ladergehäuse 22, in dem eine Steuereinheit 23, ein Lader-Transceiver 24 und eine Lader-Speichereinheit 25 positioniert sind.

Zum elektrischen bzw. elektronischen Verbinden weist die Akku-Schnittstelle 14 einen Pluskontakt 14a, einen Minuskontakt 14b und einen Kommunikationskontakt 14c auf. Der Plus- und Minuskontakt 14a, 14b dient zur Erzeugen eines Stromkreises (d.h. Energiefluss), wenn der Akkumulator 5 mit einer Werkzeugmaschine 1 oder einer Ladevorrichtung 21 verbunden ist. Der Kommunikationskontakt 14c dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-lonen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen L mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme elektrischer Energie in die Energiespeicherzellen 13, wenn der Akkumulator 5 mit einer Ladevorrichtung 21 verbunden ist. bzw. aus den Energiespeicherzellen 13, sowie die Abgabe von elektrischer Energie aus den Energiespeicherzellen 13, wenn der Akkumulator 5 mit einer Werkzeugmaschine 1 verbunden ist.

Darüber hinaus wird mit Hilfe der Steuerungseinrichtung 15 die konkrete Menge an elektrischer Energie gesteuert, die von den Energiespeicherzellen 13 aufgenommen oder abgegeben werden sollen.

Die Sensoren 17a, 17b, 17c dienen zum Erfassen von unterschiedlichen Betriebskennwerten. Zu den Betriebskennwerten gehören unter anderem der Spannungswert der Energiespeicherzellen, der Stromstärkewerte der Energiespeicherzellen oder die Temperatur der Energiespeicherzellen.

Gemäß einem alternativen Ausführungsbeispiel kann der Akkumulator 5 auch mehr oder weniger als drei Sensoren enthalten.

Der erste Sensor 17a ist als Voltmeter (auch als Spannungsmesseinrichtung bezeichnet) ausgestaltet zum Erfassen von Spannungswerten.

Der zweite Sensor 17b ist als Amperemeter (auch als Strommessgerät, Strommesser Stromstärkemesseinrichtung bezeichnet) ausgestaltet zum Erfassen von Stromstärkewerten. Der dritte Sensor 17c ist als Temperatursensor (auch als Thermometer bezeichnet) ausgestaltet und dient zum Erfassen von Temperaturwerten. Wie in den Figuren zu erkennen, ist der als Temperatursensor ausgestaltete dritte Sensor 17c zwischen den Energiespeicherzellen 13 positioniert.

Die Sensoren 17a, 17b, 17c sind so mit der Steuerungseinrichtung 15 und der Speichereinrichtung 19 verbunden, dass die von den Sensoren 17a, 17b, 17c erfassten Betriebskennwerte an die Steuerungseinrichtung 15 und die Speichereinrichtung 19 gesendet werden können. In der Speichereinrichtung 19 sind unterschiedliche Kategorien an Schwellwerten für die Betriebskennwerte gespeichert.

Eine erste Kategorie enthält Schwellwerte, die auf ein erhebliches technisches Problem hindeuten, falls ein oder mehrere Betriebskennwerte Schwellwerte dieser ersten Kategorie erreichen. Ein erhebliches technisches Problem kann zu einem Totalausfall des Akkumulators 5 führen.

Eine zweite Kategorie enthält Schwellwerte, die lediglich auf eine technische Verschlechterung oder Ineffizienz eines oder mehrerer Bauteile des Akkumulators schließen lassen, falls ein oder mehrere Betriebskennwerte Schwellwerte dieser zweiten Kategorie erreichen.

Alternativ können auch mehr als zwei Kategorien an Schwellwerten in der Speichereinrichtung 19 gespeichert sein.

Die Schwellwerte der ersten Kategorie können dabei höher oder niedriger sein als die Schwellwerte der zweiten Kategorie. Darüber hinaus können die Schwellwerte der ersten Kategorie ein %-Anteil der Schwellwerte der zweiten Kategorie betragen.

Darüber hinaus werden in der Speichereinrichtung 19 die von den Sensoren 17a, 17b, 17c erfassten Betriebskennwerte gespeichert. Mit Hilfe eines Microkontrollers in der Steuerungseinrichtung 15 können die jeweils erfassten Betriebskennwerte mit den entsprechenden bzw. korrespondierenden Schwellwerten verglichen werden.

Des Weiteren ist in dem Akkumulator 5 eine Echtzeituhr 16 enthalten. Die Echtzeituhr 16 dient zum Markieren jedes erfassten Betriebskennwertes mit einem Zeitstempel (auch Uhrzeit oder Zeitpunkt genannt). Der mit einem Zeitstempel versehene Betriebskennwert wird in der Speichereinrichtung 19 gespeichert und dient zum Kontrollieren, wann und welche Betriebskennwerte durch einen der Sensoren 17a, 17b, 17c erfasst wurde.

Der Transceiver 18 (auch Sendeempfänger genannt) dient zum Senden und Empfangen von elektrischen Signalen. Der Transceiver 18 ist in Form eines Blue-Tooth-Transceivers ausgestaltet, wodurch Daten und Informationen in Form von Signalen an externe Einrichtungen gesendet und empfangen werden können. Bei diesen externen Einrichtungen kann es sich um ein Smartphone, ein Tablet, einen Computer oder einen Datenspeicher (auch als Cloud bezeichnet) handeln.

Gemäß alternativer Ausführungsformen kann der Transceiver auch auf einer anderen Funktechnologie oder auf einer drahtgebundenen Technologie basieren.

Die Speichereinrichtung 19 dient zum Abspeichern des mit einem Zeitstempel markierten Betriebskennwerts. In dem vorliegenden Ausführungsbeispiel ist die Speichereinrichtung 19 als nichtflüchtiger Speicher (auch als Sekundärspeicher, Dauerspeicher oder Festspeicher bezeichnet) ausgestaltet.

Zur Durchführung des Verfahrens zum Steuern bzw. Regeln des Akkumulators 5 wird zunächst der Akkumulator 5 von einem Aktivierungszustand in einen Deaktivierungszustand eingestellt. Die Einstellung von dem Aktivierungszustand in den Deaktivierungszustand erfolgt dadurch, dass der Aktivierungsschalter 8 nicht länger durch einen Anwender in Pfeilrichtung A gedrückt wird. Der Anwender ist in den Figuren nicht gezeigt.

Im Aktivierungszustand (d.h. wenn der Aktivierungsschalter 8 durch einen Anwender in Pfeilrichtung A gedrückt wird) wird beispielsweise elektrische Energie von den Energiespeicherzellen durch eine Ladevorrichtung 21 aufgenommen oder an einen Verbraucher (z.B. eine mit dem Akkumulator 5 verbundene Werkzeugmaschine 1) abgegeben.

Wie vorstehend erwähnt geschieht das Einstellen des Akkumulators 5 von dem Aktivierungszustand in einen Deaktivierungszustand beispielsweise dadurch, dass der Aktivierungsschalter 8 einer mit dem Akkumulator 5 verbundenen Werkzeugmaschine 1 nicht mehr betätigt wird. Als Folge hieraus wird keine elektrische Energie mehr von den Energiespeicherzellen 13 des Akkumulators 5 mehr an einen Verbraucher (z.B. Elektromotor 9) der Werkzeugmaschine 1 gebracht.

Der Deaktivierungszustand kann dabei auch als Ruhezustand oder Ruhemodus bezeichnet werden, bei dem keine elektrische Energie von den Energiespeicherzellen 13 durch eine Ladevorrichtung 21 aufgenommen oder an einen Verbraucher (z.B. Werkzeugmaschine 1 oder dergleichen) abgegeben wird.

Als nächstes wird der Akkumulator 5 von dem Deaktivierungszustand in einen Überprüfungszustand eingestellt. Das Einstellen des Akkumulators 5 von dem Deaktivierungszustand in einen Überprüfungszustand erfolgt dabei nach Ablauf einer ersten Zeitdauer. Die erste Zeitdauer beträgt in dem vorliegenden Ausführungsbeispiel fünf Minuten. Die erste Zeitdauer beginnt ab dem Zeitpunkt zu laufen, nachdem der Akkumulator 5 in den Deaktivierungszustand eingestellt ist. Der Akkumulator 5 verbleibt dann für eine zweite Zeitdauer in dem Überprüfungszustand eingestellt. Die zweite Zeitdauer beträgt in dem vorliegenden Ausführungsbeispiel 0,3 Sekunden.

Das Verhältnis des ersten Zeitraums zu dem zweiten Zeitraum beträgt wenigstens 1/1000.

Es ist jedoch auch möglich, dass die erste Zeitdauer auch mehr oder weniger als fünf Minuten beträgt.

Mit Hilfe der Echtzeituhr steuert die Steuerungseinrichtung 15 den periodischen Wechsel zwischen der Einstellung des Akkumulators 5 in den Deaktivierungszustand und den Überprüfungszustand, vgl. Figur 4. Der von der Steuerungseinrichtung 15 überwachte und gesteuerte Wechsel zwischen dem Deaktivierungszustand und Überprüfungszustand geschieht so lange, bis durch Drücken des Aktivierungsschalters 8 der Akkumulator 5 in den Aktivierungszustand eingestellt wird. In dem Aktivierungszustand erfassen die Sensoren 17a, 17b, 17c die entsprechenden Betriebskennwerten periodisch bzw. fortlaufend.

Während sich der Akkumulator 5 in dem Überprüfungszustand befindet, erfassen die Sensoren 17a, 17b, 17c die entsprechenden Betriebskennwerten.

Der als Voltmeter ausgestaltete erste Sensor 17a erfasst den Spannungswert der Energiespeicherzellen 13. Es ist dabei auch möglich, dass mit mehreren Sensoren die Spannung der einzelnen Energiespeicherzellen 13 erfasst werden. Hierdurch kann ein Debalancing (d.h. ein Unausgeglichenheit) bei den Spannungswerten der einzelnen Energiespeicherzellen ermittelt werden, welche wiederum auf ein technisches Fehlfunktion hinweisen kann.

Der als Amperemeter ausgestaltete zweite Sensor 17b erfasst den Stromstärkewert der Energiespeicherzellen 13. Es ist dabei auch möglich, dass mit mehreren Sensoren der Stromstärkewert der einzelnen Energiespeicherzellen 13 erfasst werden.

Der als Temperatursensor ausgestaltete dritte Sensor 17c erfasst den Temperaturwert der in der Mitte des Akkumulators 5 positionierten Energiespeicherzellen 13. Es ist dabei auch möglich, dass mit mehreren Sensoren die Temperatur an unterschiedlichen Stellen des Akkumulators 5 erfasst wird.

Durch die Verbindung der Sensoren 17a, 17b, 17c mit der Steuerungseinrichtung 15 und der Speichereinrichtung 19 werden die von den Sensoren 17a, 17b, 17c erfassten Betriebskennwerte an die Steuerungseinrichtung 15 und die Speichereinrichtung 19 gesendet. Wie vorstehend erwähnt sind in der Speichereinrichtung 19 korrespondierende Schwellwerte zu den Betriebskennwerten hinterlegt.

Die von den Sensoren 17a, 17b, 17c erfassten Betriebskennwerte werden in der Steuerungseinrichtung 15 mit den Schwellwerten aus der Speichereinrichtung 19 verglichen. Der Akkumulator 5 wird von dem Überprüfungszustand in einen Deaktivierungszustand eingestellt, wenn kein erfasster Betriebskennwert mindestens einem ersten Schwellwert entspricht.

Alternativ wird der Akkumulator 5 von dem Überprüfungszustand in einen Sperrzustand eingestellt, wenn wenigstens ein erfasster Betriebskennwert mindestens einem ersten Schwellwert entspricht. Dies kann der Fall sein, wenn beispielsweise die erfasste Temperatur einen Schwellwert von 70°C erreicht. Es ist möglich, dass ein (in den Figuren nicht gezeigtes) Kühlsystem für die Energiespeicherzellen 13 nicht mehr ausreichend für Kühlung sorgt und eine umfassende Beschädigung des Akkumulators 5 nicht ausgeschlossen werden kann.

Des Weiteren kann der Fall sein, dass ein erfasster Spannungswert der Energiespeicherzellen 13 einem Schwellwert von lediglich 15 Volt entsprechen. Eine Fehlfunktion oder sogar größere Beschädigung an dem Akkumulator 5 kann demzufolge nicht ausgeschlossen werden.

Wie vorstehend erwähnt, sind in der Speichereinrichtung 19 mehrere Schwellwerte unterschiedlicher Kategorien gespeichert.

Die erste Zeitdauer wird reduziert, wenn wenigstens ein erfasster Betriebskennwert mindestens einem zweiten Schwellwert entspricht, wobei der zweite Schwellwert geringer oder höher ist als der erste Schwellwert. In Bezug auf den Temperaturwert beträgt der erste Schwellwert 70°C und der zweite Schwellwert 65°C.

So wird die erste Zeitdauer von fünf Minuten auf zwei Minuten reduziert, wenn ein Temperaturwert von bereits 65°C erfasst wird.

Der erfasste bzw. dem zweiten Schwellwert entsprechende Temperaturwert deutet bereits auf eine ungewünschte Temperaturerhöhung hin, welche bisher jedoch noch nicht als kritisch angesehen wird.

Ein Erfassung der Temperatur mit einer höheren Frequenz ist jedoch sinnvoll, um den weiteren Temperaturverfall genauer zu erfassen und ggf. einen sprunghaften Temperaturanstieg auf weit über 70°C zu vermeiden.

Dies kann entsprechend auch der Fall sein, wenn der Spannungswert der Energiespeicherzellen 13 einen zweiten Schwellwert von 17 Volt erreicht.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energieversorgung
- 6: Lüftungseinrichtung
- 7: Schnittstelle
- 8: Aktivierungsschalter
- 9: Elektromotor
- 10: Getriebevorrichtung
- 11: Antriebswelle
- 12: Steuereinrichtung
- 13: Energiespeicherzelle
- 14: Akku-Schnittstelle
- 14a: Pluskontakt der Akku-Schnittstelle
- 14b: Minuskontakt der Akku-Schnittstelle
- 14c: Kommunikationskontakt der Akku-Schnittstelle
- 15: Steuerungseinrichtung
- 16: Echtzeituhr
- 17a: erster Sensor
- 17b: zweiter Sensor
- 17c: dritter Sensor
- 18: Transceiver
- 19: Speichereinrichtung
- 20: Akku-Gehäuse
- 20a: Deckelelement
- 20b: Seitenwände
- 20c: Bodenelement
- 21: Ladevorrichtung
- 22: Ladergehäuse
- 23: Steuereinheit
- 24: Lader-Transceiver
- 25: Lader-Speichereinheit

## Patentansprüche

1. Verfahren zum Steuern und/oder Regeln eines Akkumulators (5), insbesondere als Energieversorgung für eine Werkzeugmaschine (1), wobei der Akkumulator (5) wenigstens eine Echtzeituhr (16), wenigstens einen Sensor (17a, 17b, 17c), wenigstens einen Transceiver (18), eine Speichereinrichtung (19) sowie eine Steuerungsvorrichtung (15) enthält,
**gekennzeichnet durch** die Verfahrensschritte
- Einstellen des Akkumulators (5) von einem Aktivierungszustand in einen Deaktivierungszustand;
- Einstellen des Akkumulators (5) von dem Deaktivierungszustand in einen Überprüfungszustand nach Ablauf einer ersten Zeitdauer ab dem Einstellen des Akkumulators (5) in den Deaktivierungszustand, wobei der Akkumulator (5) für eine zweite Zeitdauer in dem Überprüfungszustand eingestellt ist;
- Erfassen wenigstens eines ersten Betriebskennwertes durch den wenigstens einen Sensor, wenn der Akkumulator (5) in dem Überprüfungszustand eingestellt ist;
- Abgleich des ersten Betriebskennwertes mit wenigstens einem hinterlegten Schwellwert;
- Einstellen des Akkumulators (5) von dem Überprüfungszustand in einen Deaktivierungszustand, wenn kein erfasster Betriebskennwert mindestens einem ersten Schwellwert entspricht; oder
- Einstellen des Akkumulators (5) von einem Überprüfungszustand in einen Sperrzustand, wenn wenigstens ein erfasster Betriebskennwert mindestens einem ersten Schwellwert entspricht.

2. Verfahren nach Anspruch 1,
**dadurch gekennzeichnet, dass** das Verhältnis des ersten Zeitraums des Akkumulators (5) in dem Deaktivierungszustand und des zweiten Zeitraums des Akkumulators (5) in dem Überprüfungszustand wenigstens 1/1000 beträgt.

3. Verfahren nach Anspruch 1 oder 2,
**dadurch gekennzeichnet, dass** die erste Zeitdauer reduziert wird, wenn wenigstens ein erfasster Betriebskennwert mindestens einem zweiten Schwellwert entspricht, wobei der zweite Schwellwert geringer oder höher ist als der erste Schwellwert.

4. Verfahren nach wenigstens einem der Ansprüche 1 bis 3,
**dadurch gekennzeichnet, dass** die erste Zeitdauer reduziert wird, wenn vor dem Einstellen des Akkumulators (5) von dem Aktivierungszustand in den Deaktivierungszustand wenigstens ein erfasster Betriebskennwert mindestens einem zweiten Schwellwert entspricht.

5. Verfahren nach wenigstens einem der Ansprüche 1 bis 4,
**gekennzeichnet durch**
- Einstellen wenigstens eines Parameters des Akkumulators (5) von einem ersten Wert in einen zweiten Wert durch die Steuerungsvorrichtung des Akkumulators (5), wenn wenigstens ein erfasster Betriebskennwert mindestens einem ersten oder zweiten Schwellwert entspricht.

6. Verfahren nach wenigstens einem der Ansprüche 1 bis 5,
**gekennzeichnet durch**
- Markieren des erfassten Betriebskennwertes mit einem Zeitstempel durch die Echtzeituhr (16) und Abspeichern des mit einem Zeitstempel markierten Betriebskennwerts in der Speichereinrichtung (19).

7. Akkumulator (5), insbesondere als Energieversorgung für eine Werkzeugmaschine (1), zur Durchführung des Verfahrens nach wenigstens einem der Ansprüche 1 bis 6, wobei der Akkumulator (5) wenigstens eine Echtzeituhr (16), wenigstens einen Sensor (17a, 17b, 17c), wenigstens einen Transceiver (18), eine Speichereinrichtung (19) sowie eine Steuerungsvorrichtung (15) enthält.

8. System enthaltend wenigstens einen Akkumulator (5), insbesondere als Energieversorgung für eine Werkzeugmaschine (1), und eine mit dem Akkumulator (5) verbindbare Systemkomponente, zur Durchführung des Verfahrens nach wenigstens einem der Ansprüche 1 bis 6, wobei der Akkumulator (5) wenigstens eine Echtzeituhr (16), wenigstens einen Sensor (17a, 17b, 17c), wenigstens einen Transceiver (18), eine Speichereinrichtung (19) sowie eine Steuerungsvorrichtung (15) und die Systemkomponente wenigstens eine Steuereinheit (23), eine Speichereinheit (25) sowie wenigstens einen Transceiver (24) enthält.

9. System nach Anspruch 8,
**dadurch gekennzeichnet, dass** das System ausgestaltet ist zum
- Aussenden wenigstens eines Signals von dem wenigstens einen Transceiver (18) des Akkumulators (5) an den wenigstens einen Transceiver der Systemkomponente, wenn wenigstens ein erfasster Betriebskennwert mindestens einem ersten Schwellwert entspricht; und
- Aussenden wenigstens eines Signals von der Systemkomponente zu dem Transceiver des Akkumulators (5) zum Einstellen wenigstens eines Parameters des Akkumulators (5) von einem ersten Wert in einen zweiten Wert.

10. System nach Anspruch 8 oder 9,
**dadurch gekennzeichnet, dass** die Systemkomponente in Form einer Werkzeugmaschine (1) oder Ladevorrichtung (21) ausgestaltet ist.
